# EUROPÄISCHE PATENTSCHRIFT

(11) **EP 0 946 926 B1**
(45) Veröffentlichungstag und Bekanntmachung des Hinweises auf die Patenterteilung: **12.12.2001**
(21) Anmeldenummer: 97950047.7
(22) Anmeldetag: 30.10.1997
(51) Int. Cl.: G06K 19/077

(54) **KONTAKTLOSE CHIPKARTE MIT TRANSPONDERSPULE**
CONTACTLESS SMART CARD WITH A TRANSPONDER COIL
CARTE A PUCE SANS CONTACT COMPRENANT UN ENROULEMENT DE TRANSPONDEUR

(30) Priorität: 01.11.1996 DE 19645083
(43) Veröffentlichungstag der Anmeldung: 06.10.1999
(73) Patentinhaber: Austria Card GmbH, 1232 Vienna (AT)
(72) Erfinder: PRANCZ, Markus, A-1200 Wien (AT)
(74) Vertreter: Riebling, Peter, Dr.-Ing.
(86) Internationale Anmeldenummer: EP9705996
(87) Internationale Veröffentlichungsnummer: WO9820450

(56) Entgegenhaltungen:
- EP-A- 0 557 934
- EP-A- 0 682 321
- DE-A- 4 205 827
- DE-C- 3 935 364
- DE-C- 4 403 753

## Beschreibung

Die Erfindung betrifft eine kontaktlose Chipkarte mit Transponderspule und ein Verfahren zu deren Herstellung.

Gegenstand der vorliegenden Erfindung ist eine Identifikationskarte mit Transponderspule und eingebautem Chipmodul, wobei die auf dem Chipmodul gespeicherten Daten ausgelesen und mit Hilfe der Transponderspule kontaktlos auf einen Empfänger übertragen werden können.

Identifikationskarten zur kontaktlosen Transaktion werden entsprechend den ISO/IEC DIS 10536 Normen für die unterschiedlichsten Anwendungen einer Standardisierung unterworfen. Zielsetzung aller dieser Normen ist die Erhöhung der Sicherheit und der Geschwindigkeit von Identifikations- und Transaktionsvorgängen bei gleichzeitiger Reduktion der integralen Kosten und einer weltweiten Anwendung und gewissen Kompatibilität.

Identifikationsvorgänge mittels sogenannter handgehaltener berührungsloser Identifikationskarten werden in immer stärkerem Ausmaß im öffentlichen Personen und Nahverkehr bzw. ganz allgemein zur komfortablen und raschen Identifikation bzw. Zutrittskontrolle und oftmals der vollautomatischen Abbuchung entsprechender Werteinheiten oder Geldbeträge verwendet.
Im überwiegenden Maße wird diese rasche und unbemerkte Identifikation sinnvoll und vom Besitzer voll akzeptiert stattfinden.

Aus dem Stand der Technik ergeben sich Druckschriften, die sich bereits mit dieser Technik auseinandersetzen. Es handelt sich dabei unter anderem um die DE -A-42 05 827, die DE-A-44 03 753 und die EP-A-0 682 321. In diesen Druckschriften werden unterschiedliche Verfahren beschrieben, die Anwendungen mit berührungslosen Identifikationskarten zeigen.

Bei mißbräuchlichem Einsatz ist der Benutzer ziemlich machtlos und kann erst rückwirkend diesen Mißbrauch feststellen. Aus diesem Grund werden reine Geldtransaktionen bevorzugt mittels kontaktbehafteter Chipkarten durchgeführt und der Transaktionsvorgang bewußt und oftmals nur nach Eingabe einer persönlichen Identifikationsnummer (PIN) durchgeführt.

Bei allen Arten von Identifikationskarten Applikationen mittels berührungsloser Transponder-Chipkarten müssen die Aspekte der länderweit durchaus sehr unterschiedlichen Datenschutzgesetze und Verordnungen bzw. ganz allgemein der guten Sitten berücksichtigt werden.

Der vorliegenden Erfindung liegt die Aufgabe zugrunde, eine Chipkarte der eingangs erwähnten Art so weiterzubilden, daß mittels eines möglichst kostengünstigen Prozesses ein möglichst einfach anwendbares Produkt dem Benutzer einer derartigen berührungslos funktionierenden Chipkarte die Möglichkeit gibt, den Vorgang der Identifikation und Transaktion bewußt herbeizuführen und weiters damit jegliche Kollision oder Konfrontation mit dem Datenschutzgesetz zu vermeiden.

Die Lösung dieser Aufgabe ist durch die technischen Merkmale des Anspruchs 1 gegeben.

Ein Herstellungsverfahren der erfindungsgemäßen Chipkarte ist Gegenstand des unabhängigen Anspruchs 11.

Wesentlich bei der vorliegenden Erfindung ist demnach die bewusste Schaltung einer Transponderspule, wobei bevorzugt die Kontaktflächen der Transponderspule mit zugeordneten Kontaktflächen eines Chipmoduls durch die willkürliche Schaltung miteinander verbunden werden.

In einer ersten, bevorzugten Ausführungsform erfolgt diese Durchschaltung der Kontaktflächen der Transponderspule zu den Kontaktflächen des Chipmoduls über ein ohmsches Kontaktelement, welches z.B. aus einem drucksensitivleitenden Silikongummi besteht, welches als Kontaktmaterial im Zwischenraum zwischen den beiden einander gegenüberliegenden Kontaktflächen liegt und - sobald der Luftzwischenraum zwischen den Kontaktflächen komprimiert wird, kommt dieses Kontaktelement sowohl in direkten ohmschen Kontakt mit den Kontaktflächen der Transponderspule als auch mit den gegenüberliegenden Kontaktflächen des Chipmoduls.

Der vorliegenden Erfindung liegt nun die Erkenntnis zugrunde, daß die Implantation eines Chipmoduls mit Kontaktflächen in der Karte und der Kontakt mit den beiden Enden der Spule prozeßtechnisch sehr einfach mittels sogenannter druckempfindlicher leitfähiger Silikon-Gummi-Matten mit Silberkügelchen herbeigeführt werden kann, und in einer weiteren Ausführungsform, durch die Ausbildung des Kartenkörpers und des zu implantierenden Chipmoduls eine Art mechanischer Schalter derart hergestellt werden kann, daß im Ruhezustand ein entsprechender Luftspalt zwischen den Kontaktpartnern gegeben ist, der nur durch mechanischen Druck, beispielsweise durch Fingerdruck, im Bereich des Chipmoduls überbrückt werden kann und dadurch zum Kontakt zwischen Chipmodul und Transponderspule und damit zur Aktivierung der Transponder-Chip Einheit führt.

In einer weiteren typischen Ausführungsform kann das Chipmodul ein sogenanntes Hybridmodul sein, das entweder zwei Chips beinhaltet, wobei ein Chip für die berührungslose Transaktion und ein zweiter Chip für die standardmäßige kontaktbehaftete Transaktion zuständig ist, oder aber einen Kombinationschip enthalten, der beide Funktionen in einem Chip vereint. In beiden Fällen müssen die Kontakte für die Transponderspule an der Unterseite bzw. Innenseite des Chipmoduls liegen, respektive auf der Seite, die den Kontaktflächen des kontaktbehafteten Chipmoduls gegenüberliegt.

In einer Weiterbildung der vorliegenden Erfindung ist es vorgesehen, daß die Schaltung der Transponderspule nicht durch willkürliche Schaltung eines Kontaktelements erfolgt, sondern daß die Schaltung durch ein externes Signal ausgelöst wird. Diese weiterführende technische Lehre hat den Vorteil, daß die Chipkarte nach der Erfindung gleichzeitig auch diebstahlgesichert ist. Ein externes Signal zum Schalten der Transponderspule wird beispielsweise von einem Personenerkennungssystem ausgelöst, welches z.B. visuell oder akustisch die Berechtigung des Benutzers zum Eintritt in einen bestimmten Bereich erkennt. Sobald dieses System den berechtigten Benutzer erkannt hat, wird ein derartiges externes Signal ausgelöst, welches dann die Transponderspule schaltet. Die Transponderspule liest dann die in dem Chipmodul gespeicherten Daten, wie z.B. Identifizierung, Zeitpunkt und andere Personendaten aus, wodurch sichergestellt ist, daß auch nur der berechtigte Benutzer dieser Chipkarte durch den geschützten Eingangsbereich gelangt.

Transaktions-Chipkarten sind durch den erforderlichen Aufbau und aufgrund der noch nicht in Großserien gefertigten Chiptypen bzw. Chipmodule üblicherweise teurer in der Herstellung und in Verbindung mit einer typischen Identifikationsanwendung häufiger und meist auch länger im Einsatz als herkömmliche kontaktbehaftete Chipkarten. An die Lebensdauer und Verwendungshäufigkeit derartiger handgehaltener Karten werden große Anforderungen gestellt und diesbezüglich stellt die Biegebeanspruchung ein wesentliches Kriterium dar. Eine Schwachstelle dabei sind die Kontakte und die Dimension der Chipfläche. In der vorliegenden Erfindung wird der feste mechanische Verbund zwischen Kartenkörper und Chipkontakten vermieden und damit wesentlich geringere Anforderungen an die Spannungsrißfestigkeit der Kontaktelemente und die Gleichmäßigkeit der Wärmeausdehnungskoeffizienten der verschiedenen Verbundpartner gestellt.

Die Herstellung der Kartengrundkörper erfolgt in bekannter Weise einer typischen Ausführungsform dadurch, daß dünne Druckbögen mit typisch 80 bis 350 Mikrometer Dicke und Formaten für Mehrfachnutzen, typischerweise 24 bzw. 48 Karten pro Druckbogen mit Abmessungen von beispielsweise 30 x 50 cm oder 50 x 70 cm mit den in der Kreditkartenproduktion üblichen Offsetdrucken und Siebdrucken kundenspezifisch gestaltet werden und falls notwendig mit entsprechenden thermisch aktivierbaren Klebebeschichtungen, bevorzugt im Siebdruck, versehen werden.

Im folgenden wird eine Ausführungsform der Erfindung anhand von Zeichnungen näher erläutert. Hierbei gehen aus den Zeichnungen und ihrer Beschreibung weitere erfindungswesentliche Merkmale und Vorteile der Erfindung hervor.
- Figur 1:: zeigt den Schnitt durch den Chipmodulbereich einer Chipkarte nach der Erfindung,
- Figur 2:: die Draufsicht auf die Folie mit Darstellung der Transponderspule,
- Figur 3:: die Draufsicht auf die Oberseite der Chipkarte bei noch nicht eingesetztem Chipmodul und noch nicht eingesetztem Schaltelement,
- Figur 4:: eine Abwandlung gegenüber Figur 3.

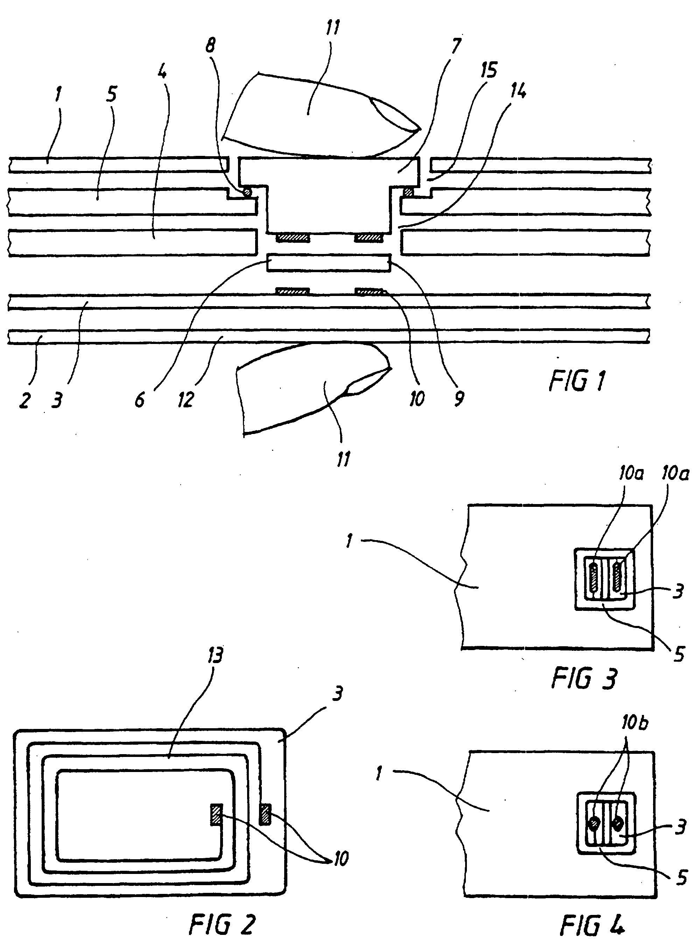

Wie in Figur 1 gezeigt, werden beispielsweise je zwei typisch 80 µ dicke, transparente Deckfolien 1 und 2 als sogenannte Overlayfolien verwendet. Diese transparenten Overlayfolien können nun wahlweise auf den Innenseiten mit thermisch aktivierbaren Schmelzklebern mittels Siebdruck oder direkt beim Folienzulieferanten beschichtet werden, wobei je nach geforderter Qualität als Material z.B. PVC-h, ABS, PET oder Polycarbonat (PC) eingesetzt werden kann und im weiteren dabei gegebenenfalls auf die Verwendbarkeit für Laserbeschriftungen und/oder Hochprägungen und/oder den Einbau eines Magnetstreifens geachtet werden muß.

Als nächste Schichten sind Folien 3 und 5 vorgesehen, wobei deren nach außen gerichtete Flächen grafisch mittels Offsetdruck und Siebdruck bzw. auch mittels der verschiedenen digitalen Druckverfahren kundenspezifisch gestaltet werden können. Üblicherweise werden diese Folien in neutralem Farbton und in Dicken von 80 µ bis 350 µ verwendet. Die innerste Schicht der Chipkarte bildet eine Kernfolie 4, die z.B. aus ABS- oder PC-Material besteht und eine Dicke von z.B. 300 µ aufweist.

Im vorliegenden Beispiel wird die Folie 5 in einer Dicke von etwa 300 µ eingesetzt und kann in Kombination mit einer PC-Deckfolie 1 z.B. aus ABS sein. In der Ausführung ABS wird entsprechend dem im Vergleich zu PC niedrigerem Schmelzpunkt eine bessere Fließeigenschaft erreicht, was unter Umständen einen homogeneren Laminataufbau bewirken kann.

Folie 3 wird in möglichst dünner Ausführung, typisch 80 µ verwendet und wird bevorzugt aus PC-Material sein, um die Trocknungsvorgänge der aufgebrachten Silberpastendrucke auf der Innenseite ohne wesentliche Schrumpfung bestehen zu können. D.h. auf dieser 80 µ PC-weiß Folie, die außen grafisch gestaltet ist, wird auf der Innenseite mittels Siebdruck, bevorzugt Zylindersiebdruck, eine sogenannte Transponderspule 13 gedruckt. Dabei werden handelsübliche Silberpasten, bevorzugt mit guter elektrischer Leitfähigkeit und geeignet für den Kunststoff-Foliendruck eingesetzt. Derartige Silberpasten werden bei der Herstellung flexibler Leiterplatten aus Polyester- und Polyamidfolien verwendet und können bei etwa 120°C getrocknet werden, ohne daß eine maßliche Beeinträchtigung dieser PC-Folien stattfindet, was natürlich für diesen Mehrfachnutzenaufbau sehr wesentlich ist.

Die Geometrie der Transponderspule wird je nach Anforderung an die Eigenschaften der Spule 13, d.h. die Anforderung an den Sende- und Empfangsvorgang und die Höhe der erzeugten Induktionsspannung in der Spule - zwecks Stromversorgung des Halbleiterbausteins - gewählt werden.

Dabei können die Anzahl der Windungen, die Leiterbahnbreite und der Leiterbahnabstand, die Formen der Anschlußkontakte 10 und natürlich die Dicke des Leitpastenaufbaues bzw. die Art der verwendeten Leitpaste variiert werden. Typischerweise werden einige 3 bis 5 Windungen mit Leiterbahnbreiten im Bereich 100 µ bis 1 mm gewählt werden. Um den ohmschen Widerstand möglich niedrig zu halten, werden u.U. mehrere übereinanderliegende Drucke durchgeführt. In einer kostengünstigeren Variante können die Silberpasten auch durch Karbonpasten, Kupferpasten oder Mischen aus den verschiedenen Leitpastentypen erfolgen.

Ein sehr wesentliches Detail stellt die Art der Anschlußkontakte 10, d.h. die Ausbildung der Enden der Spule 13 dar, da diese zur Kontaktierung des Chipmoduls 7 benötigt werden.

In der vorliegenden Erfindung ist nun sehr wesentlich, daß die Anschlußflächen 9 des Chipmoduls 7 auf der Unterseite, d.h. der Seite, die in Kontakt zu den Spulen-Anschlußkontakten 10 treten sollen, liegen und einen entsprechend weiten Abstand haben, so daß die Bahnen der Spule 13 dazwischen durchgeführt werden können und die Enden der Spule 13 relativ großflächig ausgeführt werden können. Übliche Leitpastendrucke in Einfach- und Mehrfachdruckausführung weisen eine Dicke von 10 bis 30 µ auf, typisch 15 bis 20 µ im getrockneten Zustand.
Die Freifräsung der Ausnehmungen 14 und 15 im Anschluß an die Lamination des gesamten aus den Folienlagen 1-5 bestehenden Paketes muß nun sehr exakt auf die erforderliche Tiefe eingestellt werden, um einerseits die Leitpaste der Transponderspule 13 elektrisch freizulegen, jedoch andererseits keine zu starke Reduktion der Leitpastendicke und damit Reduktion des Leitungsquerschnittes der Spule 13 herbeizuführen.

Übliche Fräsanlagen für die Vertiefungen von Chipmodulen arbeiten mit Toleranzen bis zu +/-10 µ. Im vorliegenden Fall ist jedoch eine Toleranz von vorzugsweise +/-3 µ anzustreben. Dabei spielt noch die Dicken-Toleranz der Folienlagen 2 und 3 eine sehr wesentliche Rolle, da diese in die Toleranzrechnung mit einbezogen werden müssen.

Diese sehr genaue mechanische Freilegung der Kontakte 10 der Spule 13 ist in der vorliegenden Erfindung gegenüber dem Stand der Technik insofern von Bedeutung, als üblicherweise derart freigelegte Kontakte 10 mittels Leitkleber oder Leitpaste kontaktiert werden und damit den Flächenleitwert verbessern.

In der vorliegenden Erfindung werden jedoch diese Anschlußflächen 10 der Spule 13 nur mittels eines Schaltelements 6 kontaktiert. Dieses Schaltelement 6 kann beispielsweise aus sogenannten druckempfindlizh-leitenden Gummimatten in Materialstärken von z.B. 0,2 bis 0,3 mm bestehen bzw. aus einzelnen Kontaktelementen pro Anschluß 10a bzw. 10b.

Derartige Gummimatten werden üblicherweise mit Nickelkügelchen oder Silberkügelchen in Form einer Matrix hergestellt und werden erst bei Druck leitend. Gemäß dem Stand der Technik werden derartige Drucksensitiv-leitende Gummimatten z.B. zur Kontaktierung von Glassubstraten, typisch LCD's und Bildschirmen als auch flexiblen Substraten verwendet und dabei wird mittels entsprechender Klammern Druck über entsprechenden Anschlußflächen hergestellt.

Im vorliegenden Fall können mittels derartiger drucksensitiv-leitender Gummimatten sehr einfache und effiziente Schalter hergestellt werden, die auf extrem geringen Raum einen funktionellen Kontakt ohne starke Deformationsvorgänge in den einzelnen Lagen der Identifikationskarte herstellen können.

In einer weiteren Ausführungsform ist vorgesehen, die Dicken der einzelnen Folienlagen 1-5 der ID-Karte derart abzustimmen, daß die Lagen 2 und 3 als Membrane verwendet werden können und zwischen sich einen Luftspalt einschließen, der durch Druckaufbringung überbrückt und somit ein Kontakt zwischen Chipmodul 7 und Transponderspule 13 hergestellt werden kann. Dabei werden die Leitpastenkontaktflächen 10 der Spule 13 mit den Kontaktflächen 9 des Chipmoduls 7 zusammengepreßt und dadurch die Funktion der Transponder-Chipkarte aktiviert. Das System ist ebenfalls ohne bewußte Druckaufbringung nicht aktiv und es kann daher keinerlei unbewußte Identifikation oder Transaktion stattfinden.

In Erweiterung dieser genannten Ausführungsform können nach deren Freilegung auf die Anschlußflächen 10 der Leitpastenkontaktflächen leitfähige elastomere Kontaktelemente mittels Dispenser oder Tampondruck aufgebracht werden, so daß im Falle des Druckaufbringens ein elastisches leitendes Element zwischen den Kontakten 9 und 10 vorhanden ist und damit zu einer optimalen Kontaktsicherheit führt.

Die Ausführung des Chipmoduls 7 wird geometrisch gemäß dem Stand der Technik ausgeführt, allerdings mit nach innen zur Transponderspule gerichteten Kontaktflächen 9, bevorzugt in vergoldeter bzw. auch verzinnter oder vernickelter Oberflächenausführung. Wahlweise kann das Chipmodul noch mit oberseitigen Kontakten für die Kontaktierung eines kontaktbehafteten Chipsystems ausgeführt werden, wobei je nach Kundenwunsch ein oder zwei Halbleiterelemente zum Einsatz gelangen. Die mechanische Fixierung des Chipelements 7 erfolgt in einer formangepassten Ausfräsung 14, 15 der Folienschichten 1, 5 und 4 mittels einer Klebebefestigung 8. Dadurch werden optimale Festigkeitswerte hinsichtlich der Biegewechselfestigkeit erreicht, als auch eine optimale Abdichtung des Innenraums (Kontaktraumes) gegen etwaige Silbermigration der Silberleitpaste. Weiters kann mittels dieses dem Stand der Technik entsprechenden Prozesses eine exakte Planheit der Oberflächen erreicht werden.

Die Figuren 3 und 4 zeigen eine Draufsicht auf die Oberseite (Deckfolienlage 1) der Chipkarte bei noch nicht eingesetztem Chipmodul und noch nicht eingesetztem Schaltelement. Man erkennt im Bereich der Ausfräsung einen Ausschnitt der Folienlage 3 mit aufgebrachter Transponderspule und deren Kontaktanschlüssen 10. Die Kontaktanschlüsse 10 können z.B. punktförmig 10a oder zur Vergrößerung der Kontaktfläche oval 10b ausgebildet sein. Die Ausfräsung vergrößert sich hin zur Kartenoberfläche (vgl. Figur 1) und man erkennt einen Teil der Folienlage 5, mit welcher später das Chipmodul 7 verklebt oder verschweißt wird.

### Zeichnungslegende

- 1: Deckfolie
- 2: Deckfolie
- 3: Folie
- 4: Kernfolie
- 5: Folie
- 6: Schaltelement
- 7: Chipmodul
- 8: Kleber
- 9: Kontaktfläche
- 10: Kontaktfläche (10a, 10b)
- 11: Finger
- 12: Kunststofflage
- 13: Transponderspule
- 14: Ausnehmung
- 15: Ausnehmung

## Patentansprüche

1. Kontaktlose Chipkarte mit Transponderspule und einem eingebauten Chipmodul, wobei die auf dem Chipmodul gespeicherten Daten ausgelesen und mit Hilfe der Transponderspule kontaktlos auf einen Empfänger übertragen werden können, wobei die Transponderspule und das Chipmodul mit sich jeweils gegenüberliegenden Kontaktflächen versehen sind, **dadurch gekennzeichnet, daß** die Kontaktflächen (9; 10) voneinander beabstandet und nur durch willkürlichen, mechanischen Druck zeitweise miteinander elektrisch verbindbar sind, und nur dann eine Auslösung einer Identifikation oder Transaktion erfolgen kann.

2. Kontaktlose Chipkarte nach Anspruch 1, **dadurch gekennzeichnet, daß** die Schaltung der Transponderspule (13) durch Fingerdruck auf däs Chipmodul (7) erfolgt.

3. Kontaktlose Chipkarte nach Anspruch 1 oder 2, **dadurch gekennzeichnet, daß** die Schaltung der Transponderspule (13) durch einen ohmschen Kontaktschluss zwischen den Kontaktflächen (10) der Transponderspule (13) und den entsprechenden Kontaktflächen (9) des Chipmoduls (7) erfolgt.

4. Kontaktlose Chipkarte nach Anspruch 1, **dadurch gekennzeichnet, daß** die Schaltung der Transponderspule (13) durch ein externes Signal verursacht wird.

5. Kontaktlose Chipkarte nach einem der Ansprüche 1 - 4, **dadurch gekennzeichnet, daß** die Chipkarte aus mehreren Folienschichten besteht und zumindest zwei Deckschichten (1,2) und eine oder mehrere Zwischenschichten (3-5) aufweist.

6. Kontaktlose Chipkarte nach einem der Ansprüche 1 - 5, **dadurch gekennzeichnet, daß** die Chipkarte eine Ausnehmung (14,15) aufweist, die sich vorzugsweise über die Folienschichten (1,4,5) erstreckt, wobei das Chipmodul (7) in der Ausnehmung (14,15) angeordnet ist.

7. Kontaktlose Chipkarte nach einem der Ansprüche 1 - 6, **dadurch gekennzeichnet, daß** das Chipmodul (7) in Richtung zur Transponderspule (13) gerichtete Kontaktflächen (9) aufweist.

8. Kontaktlose Chipkarte nach einem der Ansprüche 1 - 7, **dadurch gekennzeichnet, daß** die Transponderspule (13) auf einer der Zwischenschichten (3-5) aufgebracht ist und im Bereich der Ausnehmung (14,15) angeordnete Kontaktflächen (10) aufweist.

9. Kontaktlose Chipkarte nach einem der Ansprüche 1 - 8, **dadurch gekennzeichnet, daß** zwischen den Kontaktflächen (9) des Chipmoduls und den Kontaktflächen (10) der Transponderspule (13) eine drucksensitiv-leitende Gummimatte (6) angeordnet ist, die ohne Druckbeaufschlagung isolierend wirkt und nur bei hinreichendem Druck leitend wird und dadurch einen Kontakt zwischen den Kontaktflächen (9, 10) herstellt.

10. Kontaktlose Chipkarte nach Anspruch 9, **dadurch gekennzeichnet, daß** die Gummimatte (6) aus einer Silikongummimatte mit matrixförmig angeordneten Silber- bzw. Nickelkügelchen besteht.

11. Verfahren zur Herstellung einer kontaktlosen Chipkarte gemäß einem der Ansprüche 1 bis 10, **dadurch gekennzeichnet,**
**daß** mehrere übereinanderliegende Folienschichten miteinander zu einer Chipkarte verbunden werden,
**daß** zuvor eine der inneren Folienschichten mit einer elektrisch leitenden Transponderspule bedruckt wird, wobei an den Enden der Transponderspule Kontaktflächen vorgesehen werden,
**daß** durch einen Fräsvorgang an der Chipkarte, im Bereich der Kontaktflächen, eine Ausnehmung zur Aufnahme des Chipmoduls geschaffen wird, wobei die Ausfräsung bis zur mit der Transponderspule bedruckten Folienschicht reicht,
**daß** das Chipmodul derart in die Ausnehmung eingesetzt wird, daß dessen Kontaktflächen in einem Abstand zu den Kontaktflächen der Transponderspule zu liegen kommen, so daß sich die Kontaktflächen onhe mechanischen Druck auf das Chipmodul nicht berühren.

12. Verfahren nach Anspruch 11, **dadurch gekennzeichnet, daß** zwischen die Kontaktflächen der Chipmoduls und die zugeordneten Kontaktflächen der Transponderspule ein drucksensitiv-leitendes Schaltelement eingelegt wird.

13. Verfahren nach Anspruch 11, **dadurch gekennzeichnet, daß** auf die Kontaktflächen der Transponderspule nach deren mechanischem Freilegen mittels eines Fräsprozesses mittels Dispenser oder Tampondruck elastische leitende Kontaktpunkte aufgebracht werden, welche bevorzugt aus Silber-, Karbon-, Kupfer- oder Nickel- gefüllten Elastomerpasten bestehen.

14. Verfahren nach Anspruch 13, **dadurch gekennzeichnet, daß** die Elastomerpasten aus Silikongummi mit typisch 1-10 mOhm*cm Volumenwiderstand bestehen und im Falle des Zusammendrückens einen guten und elastischen und damit sicheren elektrischen Kontakt ermöglichen.

15. Verfahren nach Anspruch 11, **dadurch gekennzeichnet, daß** durch den Freifräsprozeß der Ausnehmung für das Chipmodul nicht die gesamte Fläche bis zu der Oberfläche der Transponderspule freigelegt wird, sondern lediglich selektiv im Bereich der beiden Kontaktflächen mittels Stirnfräser und entsprechend erhöhter z-Achsen Genauigkeit und anschließend in diese Vertiefungen entsprechende Elastomerkontaktelemente eingebracht werden, die mittels Druckbeaufschlagung zu einer Aktivierung des Transponder-Chip-Systems führen.

## Claims

1. Contactless smart card with transponder coil and a built-in chip module, wherein the data stored on the chip module can be read out and contactlessly transferred to a receiver by means of the transponder coil, the transponder coil and the chip module being provided with opposing contact faces, **characterized in that** the contact faces (9; 10) are spaced apart from each other and are temporarily electrically connectable to each other only by deliberate application of mechanical pressure, and only then can a release be given for an identification or transaction.

2. Contactless smart card according to Claim 1, **characterized in that** switching of the transponder coil (13) is effected by finger pressure on the chip module (7).

3. Contactless smart card according to Claim 1 or Claim 2, **characterized in that** switching of the transponder coil (13) is effected by ohmic contact between the contact faces (10) of the transponder coil (13) and the corresponding contact faces (9) of the chip module (7).

4. Contactless smart card according to Claim 1, **characterized in that** switching of the transponder coil (13) is effected by an external signal.

5. Contactless smart card according to any one of Claims 1 - 4, **characterized in that** the smart card consists of a plurality of foil layers and has at least two outer layers (1, 2) and one or more intermediate layers (3-5).

6. Contactless smart card according to any one of Claims 1 - 5, **characterized in that** the smart card has a recess (14, 15) which preferably extends through the foil layers (1, 4, 5), the chip module (7) being arranged in the recess (14, 15).

7. Contactless smart card according to any one of Claims 1 - 6, **characterized in that** the chip module (7) has contact faces (9) directed towards the transponder coil (13).

8. Contactless smart card according to any one of Claims 1 - 7, **characterized in that** the transponder coil (13) is affixed to one of the intermediate layers (3-5) and has contact faces (10) located in the region of the recess (14, 15).

9. Contactless smart card according to any one of Claims 1 - 8, **characterized in that** between the contact faces (9) of the chip module and the contact faces (10) of the transponder coil (13) a rubber mat (6) is arranged which is conductive in response to pressure and acts as an insulator when not subjected to pressure, and only when sufficient pressure is applied becomes conductive thereby establishing contact between the contact faces (9, 10).

10. Contactless smart card according to Claim 9, **characterized in that** the rubber mat (6) consists of a silicone rubber mat with silver and/or nickel spherules arranged in a matrix.

11. Process for the manufacture of a contactless smart card according to any one of Claims 1 to 10, **characterized in that**
a plurality of superimposed foil layers are joined together to form a smart card,
prior to its incorporation in the smart card, one of the inner foil layers is imprinted with an electrically conductive transponder coil, the ends of the transponder coil being provided with contact faces,
by a milling operation on the smart card in the region of the contact faces, a recess is formed to accommodate the chip module, the milled recess reaching down to the foil layer imprinted with the transponder coil,
the module is inserted into the recess so that its contact faces are located at a distance from the contact faces of the transponder coil, so that the contact faces do not touch in the absence of mechanical pressure on the chip module.

12. Process according to Claim 11, **characterized in that** a switch element which is conductive in response to pressure is placed between the contact faces of the chip module and the corresponding contact faces of the transponder coil.

13. Process according to Claim 11, **characterized in that** following the exposure of the contact faces of the transponder coil by machining by a milling process, elastic conductive contact-points, preferably consisting of silver-, black diamond-, copper- or nickel-filled elastomer masses, are applied to the said contact faces by dispenser or dabber.

14. Process according to Claim 13, **characterized in that** the elastomer masses consist of silicone rubber with a resistivity of typically 1-10 mΩ.cm, and when compressed allow good and elastic, and hence reliable, electrical contact.

15. Process according to Claim 11, **characterized in that** in the milling process to form the recess for the chip module, material is removed down to the surface of the transponder coil not over the full area of the recess, but only selectively in the region of the two contact faces, by means of end mills with correspondingly increased z-axis accuracy, and into the wells thus formed corresponding elastomer contact-elements are inserted which when subjected to pressure cause the transponder-chip system to be activated.

## Revendications

1. Carte à puce sans contact comportant une bobine de transpondeur et un module de puce intégré, les données stockées sur le module de puce pouvant être lues et et pouvant être transmises sans contact à un récepteur à l'aide de la bobine de transpondeur, et la bobine de transpondeur et le module de puce étant pourvus de surfaces de contact opposées, **caractérisée en ce que** les surfaces de contact (9 ; 10) sont espacées l'une de l'autre et ne peuvent être reliées électriquement, temporairement, que grâce à une pression mécanique arbitraire, et le déclenchement d'une identification ou d'une transaction ne peut avoir lieu que dans ce cas.

2. Carte à puce sans contact selon la revendication 1, **caractérisée en ce que** l'actionnement de la bobine de transpondeur (13) se fait grâce à une pression du doigt sur le module de puce (7).

3. Carte à puce sans contact selon la revendication 1 ou 2, **caractérisée en ce que** l'actionnement de la bobine de transpondeur (13) se fait grâce à un contact ohmique entre les surfaces de contact (10) de la bobine de transpondeur (13) et les surfaces de contact correspondantes (9) du module de puce (7).

4. Carte à puce sans contact selon la revendication 1, **caractérisée en ce que** l'actionnement de la bobine de transpondeur (13) est déclenché par un signal extérieur.

5. Carte à puce sans contact selon l'une des revendications 1 à 4, **caractérisée en ce qu'**elle se compose de plusieurs couches de feuilles et comprend au moins deux couches de recouvrement (1, 2) et une ou plusieurs couches intermédiaires (3-5).

6. Carte à puce sans contact selon l'une des revendications 1 à 5, **caractérisée en ce qu'**elle présente un creux (14, 15) qui s'étend de préférence sur les couches de feuilles (1, 4, 5), le module de puce (7) étant disposé dans le creux (14, 15).

7. Carte à puce sans contact selon l'une des revendications 1 à 6, **caractérisée en ce que** le module de puce (7) présente des surfaces de contact (9) dirigées vers la bobine de transpondeur (13).

8. Carte à puce sans contact selon l'une des revendications 1 à 7, **caractérisée en ce que** la bobine de transpondeur (13) est posée sur l'une des couches intermédiaires (3-5) et présente des surfaces de contact (10) disposées dans la zone du creux (14, 15).

9. Carte à puce sans contact selon l'une des revendications 1 à 8, **caractérisée en ce qu'**il est prévu entre les surfaces de contact (9) du module de puce et les surfaces de contact (10) de la bobine de transpondeur (13) un mat en caoutchouc (6) conducteur sensible à la pression qui a une action isolante, quand il n'est pas soumis à une pression, et qui ne devient conducteur qu'en présence d'une pression suffisante et réalise ainsi un contact entre les surfaces de contact (9, 10).

10. Carte à puce sans contact selon la revendication 9, **caractérisée en ce que** le mat en caoutchouc (6) se compose d'un mat en caoutchouc silicone avec des billes d'argent ou de nickel disposées en forme de matrice.

11. Procédé pour la fabrication d'une carte à puce sans contact selon l'une des revendications 1 à 10, **caractérisé**
**en ce qu'**on relie plusieurs couches de feuilles superposées pour former une carte à puce,
**en ce qu'**on imprime auparavant une bobine de transpondeur conductrice d'électricité sur l'une des couches de feuilles intérieures, des surfaces de contact étant prévues aux extrémités de la bobine de transpondeur,
**en ce qu'**on crée par fraisage sur la carte à puce, dans la zone des surfaces de contact, un creux destiné à recevoir le module de puce, étant précisé qu'il est suffisant de fraiser jusqu'à la couche de feuille sur laquelle la bobine de transpondeur est imprimée, et
**en ce qu'**on place le module de puce dans le creux de telle sorte que ses surfaces de contact viennent se placer à une certaine distance des surfaces de contact de la bobine de transpondeur, pour que les surfaces de contact ne se touchent pas si aucune pression mécanique n'est exercée sur le module de puce.

12. Procédé selon la revendication 11, **caractérisé en ce qu'**on place, entre les surfaces de contact du module de puce et les surfaces de contact associées de la bobine de transpondeur, un élément d'actionnement conducteur sensible à la pression.

13. Procédé selon la revendication 11, **caractérisé en ce qu'**on applique sur les surfaces de contact de la bobine de transpondeur, à l'aide d'un distributeur ou d'un tampon et après avoir dégagé mécaniquement ces surfaces de contact par fraisage, des points de contact conducteurs élastiques qui se composent de préférence de pâtes élastomères contenant une charge d'argent, de carbone, de cuivre ou de nickel.

14. Procédé selon la revendication 13, **caractérisé en ce que** les pâtes élastomères se composent de caoutchouc silicone présentant de manière typique une résistivité de 1-10 mOhm*cm et permettent, en cas de compression, un contact électrique bon et élastique, et donc fiable.

15. Procédé selon la revendication 11, **caractérisé en ce que** grâce au fraisage du creux pour le module de puce, on ne dégage pas toute la surface jusqu'à la surface de la bobine de transpondeur, mais simplement sélectivement dans la zone des deux surfaces de contact, à l'aide d'une fraise de surface et avec une précision des axes z accrue en conséquence, et on place ensuite dans ces creux des éléments de contact en élastomère appropriés qui, en étant soumis à une pression, provoquent une activation du système transpondeur-puce.
